# EUROPEAN PATENT APPLICATION

(11) **EP 1 401 229 A1**
(43) Date of publication of application: **24.03.2004**
(21) Application number: 03018183.8
(22) Date of filing: 09.08.2003
(51) Int. Cl.: H04Q 7/38

(54) **Method and apparatus for faciliting handovers for a group of mobile radios**

(30) Priority: 23.09.2002 US 252015
(71) Applicant: Telefonaktiebolaget LM Ericsson (publ), 126 25 Stockholm (SE)
(72) Inventor: De Torbal, René Fernand Emile, 5644 GA Eindhoven (NL)
(74) Representative: Tonscheidt, Andreas

(57) **Abstract**

Advance handover notice is given to a "target" base station of a group of mobile radio connections that will be soon be handed over the to the target base station from a current, "serving" base station. This advance notice permits the target base station to reserve resources and prepare for the handovers of the mobile radio connections. In addition, the handover operation is initiated earlier than it would be otherwise. Early handover initiation is possible because the route of the moving vehicle is known or is predictable, and therefore, the serving and target base stations are known or may be predicted in advance. In this way, the likelihood of successful handovers with no dropped calls is increased for mobile stations moving at high speed and/or together as a group.

## Description

### FIELD OF THE INVENTION

The present invention relates generally to radio communications systems, such as cellular communication systems, having mobile radios and a radio network infrastructure. More particularly, the present invention facilitates communications between a group of mobile radios positioned to move together, such as on a vehicle like a train or a bus, and the network infrastructure.

### BACKGROUND and summary of the invention

In a cellular communications system, radio base stations are installed throughout a geographic region. Each base station provides radio coverage for a corresponding geographic region, typically referred to as a cell. Mobile radios, sometimes called mobile stations (MSs), cellular phones, user equipments (UEs), subscriber units, etc., may be positioned anywhere in these coverage areas and communicate with at least one of the radio base stations. As a mobile radio moves, an active radio connection established between that mobile radio and the cellular network may need to be transferred or "handed over" to one or more other "target" radio base stations that may be better able to serve that mobile radio in its new location. In this way, the cellular system provides continued communication with the mobile radio without apparent interruption to the user. Second generation cellular systems, such as Global System for Mobile communications (GSM) and Digital Advanced Mobile Phone System (DAMPS), support "hard" handover where the connection with a serving base station is "broken" before the connection is established and continued at the next base station. Third generation cellular systems, such as Universal Mobile Telecommunication System (UMTS), support "soft," "make-before-break" handover where plural base stations simultaneously support a radio connection with a mobile station.

Hard and soft handovers procedures typically have each mobile radio monitor the received signal strength of signals transmitted by a closest "serving" base station and by surrounding or neighboring base stations. Handover is generally only initiated when two main conditions are met. First, the received signal strength of the current serving base station is less than the received signal strength of a neighboring base station. Second, the difference in received signal strength between the two base stations is greater than a certain threshold over a certain time period.

Although these handover procedures work quite well in many cellular communication situations, they are not well-adapted to certain moving vehicle situations, e.g., in vehicles like trains, buses, airplanes, ships, subways, etc. One such situation is where the mobile radio is moving at high speed. By the time a handover request is made, orchestrated, and finally completed, the original connection with the serving base station may have been lost/dropped before the handover connection with the new base station can be properly established. Another such situation is where a large number of mobile radios are moving together as a group requiring handover of many connections at the same time. The large number of simultaneous handover requests may delay or even overload the radio network so that all of the handover requests can not be successfully processed and completed in time. Both situations may result in inadvertent and undesirable dropped calls.

The present invention overcomes these problems by giving advance handover notice to a "target" base station of a group of mobile radio connections that will be soon be handed over to the target base station from a current "serving" base station. With this advance notice, the target base station reserves resources and prepares for the handovers of the mobile radio connections. In addition, handover operations are initiated earlier than they would be otherwise. Early handover initiation is possible because the route of the moving vehicle is known or is predictable, and therefore, the target base station(s) are known or may be predicted in advance. In this way, the likelihood of successful handovers with no dropped calls is increased for mobile radios moving at high speed and/or together as a group.

A vehicle transporting a group of mobile radios includes an on-board radio unit that identifies active radio connections between mobile radios in the group and a serving radio base station that will need to be handed over to a target radio base station. Radio transmitting circuitry in the on-board radio unit sends a message to the target radio base station with the identified connections to prepare the target radio base station for their handover. The on-board radio unit may be integrated with or connected to a typical mobile radio that is augmented to include a first omni-directional antenna for communication with the serving radio base station and a second directional antenna for communication with the target radio base station. The moving vehicle may be a train, airplane, bus, ship, or other people transporter.

A handover preparation controller in the on-board radio unit, knowing a direction or route of travel of the vehicle, determines when handover of the identified connections to the target radio base station will be required. The handover notification message sent to the target radio base station may include a list of identifiers for the mobile radios with active connections and/or their radio connection information, e.g., channel information frequencies, spreading codes, etc., that will require handover. The message may also include an identification of the vehicle, an identification of the on-board radio unit, an identifier of the first radio base station, a speed of the vehicle, a direction of the vehicle, and other information. The handover notification message is sent when one or more mobile radios in the group receive a communication from the target radio base station at or above a minimum handover threshold. That minimum handover threshold is lower than, and therefore, crossed much earlier than traditional thresholds used in handover making decisions. The message may be sent from the on-board unit asynchronously with respect to timing at the target radio base station or synchronously with respect to timing at the target base station.

In response to a handover notification message, the target radio base station reserves resources in anticipation of an early handover. If the target base station lacks sufficient resources for the handover, one or more of its existing connections with other radios may be handed over to a third radio base station in order to free up resources for the group handover.

In conjunction with the handover notification, a base station controller coupled to the serving and target base stations initiates an early handover operations for the group of active mobile connections. Early handover initiation allows more time to complete all of the handovers successfully. In a preferred example embodiment, the base station controller orchestrates a forced handover of the group of mobile stations to the target base station.

### BRIEF DESCRIPTION OF THE DRAWINGS

The foregoing and other objects, features, and advantages of the present invention may be more readily understood with reference to the following description taken in conjunction with the accompanying drawings.
Fig. 1 is a diagram of a cellular communication system in which the present invention may be employed;
Fig. 2 illustrates in more detail certain aspects of the cellular system shown in Fig. 1;
Fig. 3 is a base station power versus distance diagram illustrating an early handover of the present invention;
Fig. 4 is a handover routine outlining procedures for implementing an example method according to the present invention.

### DETAILED DESCRIPTION

In the following description, for purposes of explanation and not limitation, specific details are set forth, such as particular embodiments, procedures, techniques, etc. in order to provide a thorough understanding of the present invention. However, it will be apparent to one skilled in the art that the present invention may be practiced in other embodiments that depart from these specific details. For example, the present invention may be employed in any context where there is a group of mobile radios moving together at the same speed in the same direction such as when they are moving together in or on a vehicle. Example vehicles include cars, buses, subways, trolleys, airplanes, and boats/ships.

In some instances, detailed descriptions of well-known methods, interfaces, devices, and signaling techniques are omitted so as not to obscure the description of the present invention with unnecessary detail. Moreover, individual function blocks are shown in some of the figures. Those skilled in the art will appreciate that the functions may be implemented using individual hardware circuits, using software functioning in conjunction with a suitably programmed digital microprocessor or general purpose computer, using an application specific integrated circuit (ASIC), and/or using one or more digital signal processors (DSPs).

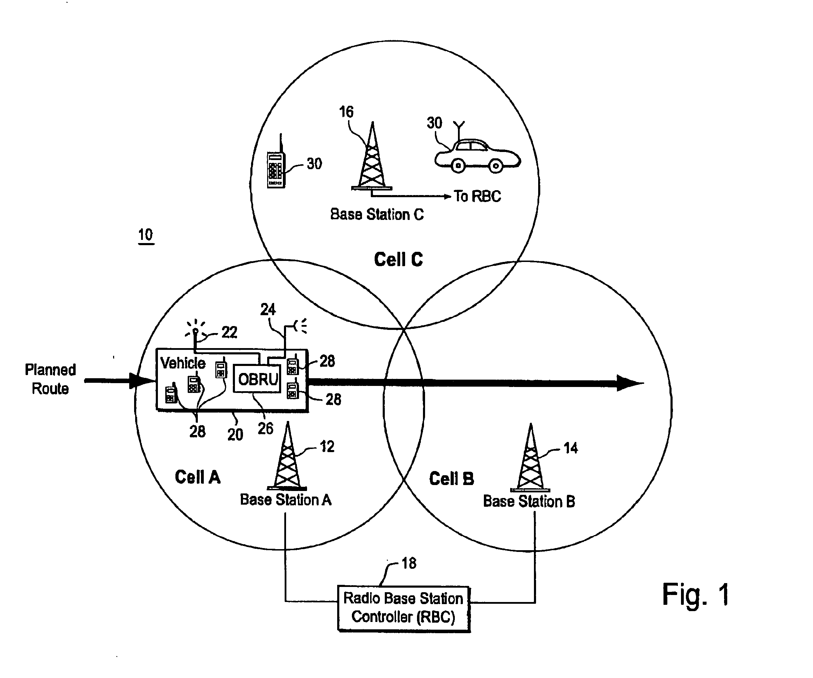

Fig. 1 illustrates a cellular communication system 10 in which an example embodiment of the present invention will be described. Three base stations A, B, and C identified by reference numerals 12, 14 and 16 provide radio service in corresponding cells A, B, and C. Base stations include transceiver and other radio-related circuitry will to effect radio communications with mobile radios 30 in or near their respected cell areas. The radio base stations 12, 14, and 16 are coupled to a radio base station controller (RBC) 18, which in turn, may be coupled to another communication network either directly or by an intervening node.

A vehicle 20 moves in along a planned route through cell A into cell B. If the vehicle is a train, for example, such a planned route coincides with a train track. The vehicle 20 transports multiple passengers. As the vehicle 20 travels along its route, many passengers may communicate with a cellular communication system using mobile radios, such as cell phones. Those cellular communications occur as is typical with each mobile radio conducting its own communications directly with a nearby, serving base station.

The mobile radios 28 travel as a group along the vehicle's route in the same direction at the same speed during the same time period. Because of such common movement, the mobile radios generate their handover requests (independent as they may be) at substantially the same time. In the example shown in Fig. 1, the mobile radios 28 having active connections communicate with the cellular system 10 by way of the serving base station A. As the vehicle 20 moves away from base station A and into cell B toward the target base station B, each of those mobile radios 28 determines that a handover to the target base station B may be necessary. Because all of the mobiles on the vehicle move together as a group, each one generates a handover request from base station A to base station B at substantially the same time. This simultaneous handover demand on the cellular infrastructure may well delay the requested handover operations to the point where one or more of the active radio connections is terminated/dropped. The more mobile radios requesting handover, the more likely one or more of those calls will be dropped because of handover processing delays. If the vehicle 20 is moving at a very high speed, dropped calls may also result even if there are only a few active mobile radios. By the time the handover requests are made, processed, and completed, the vehicle may have moved out of range of base station A before the handovers are completed to base station B.

The vehicle 20 includes on-board radio unit (OBRU) 26 coupled to an omni-directional antenna 22 for communications with base station A and to a directional antenna 24 for communication with base station B. The on-board radio unit 26 may employ circuitry similar to that used in each mobile radio 28 with the additional hardware/software for selectively communicating over the antennas 22 and 24. The on-board radio unit 26 monitors the position of the vehicle 20 as it travels along the planned route relative to the base stations which will serve the vehicle 20 along its route, e.g., by monitoring the latitude/longitude of the vehicle 20. At a certain position along the planned route, the OBRU 26 initiates a handover notification procedure to the upcoming base station B described below. That notification informs base station B in advance of the upcoming group handover allowing the target base station B to prepare for the upcoming handover including reserving resources for the handover of the active mobile communications.

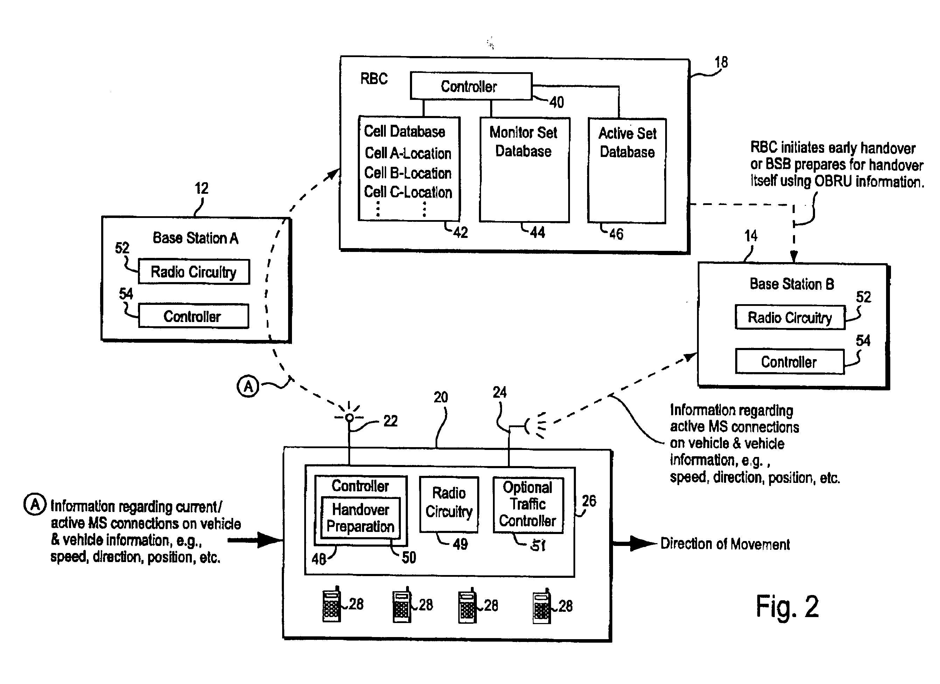

Fig. 2 illustrates in further detail the handover process described in conjunction with Fig. 1. The radio base station controller 18 includes a main controller 40 including a cell database 42, a "monitor set" database 44, and an "active set" database 46. The cell database 42 stores the geographical position of each cell designated by a latitude and a longitude. Cell planners typically enter this cell position information into the database 42.

Each mobile radio 28 periodically measures the strength or quality of radio signals transmitted by certain proximate radio base stations. The radio base station controller 18 sends to each mobile radio 28 via base station A a monitored set of base stations. The mobile station 28 measures the received signal strength/quality of a signal broadcast by those monitored base stations and periodically sends those measurements back to the radio base station controller 18. The controller 40 in the RBC 18 compares the base station signal strength/quality measurements with a threshold. When the measurement for a particular base station exceeds that threshold for a particular time period, that base station/cell is added to an active set for the mobile radio. An active set is stored for each mobile radio in the "active set" database 46. Similarly, base stations/cells whose measured signal drops below a certain threshold for a certain period of time are removed from that mobile radio's active set in the database 46. The RBC 18 informs the mobile radio of its current monitor set and active set by sending "update monitor set" and "update active set" commands.

Each base station A and B includes in this simplified drawing conventional radio tranceiving and other processing circuitry 52 and at least one controller 54 for controlling the operation of the base station. The on-board radio unit 26 in the vehicle 20 includes a controller 48 with a handover preparation sub-controller 50, radio transceiving and processing circuitry 49, and an optional traffic controller 51. An omni-directional antenna 22 used to communicate with the current serving base station A is coupled to the radio circuitry 49. A high gain, directional antenna 24 used to communicate with the target base station B is also coupled to the radio circuitry 49. The OBRU controller 48 implements traditional mobile radio functions as well as the functions associated with handover monitoring, notification, and preparation in accordance with the present invention. The optional traffic controller 51 may be used to effect communications between a traffic controller (not shown) and the vehicle 20.

The on-board radio unit 26 does not control or become involved in the normal communications between the mobile radios 28 and the cellular network. One of the advantages of the present invention is that there is no need to modify the mobile radios or the procedures and protocols used between them and the radio network. This aspect of the invention is particularly important because such procedures and protocols follow a well-established and required standard, e.g., the 3GPP standard for third generation UMTS communications. Rather, the on-board radio unit 26 monitors the active connections of the on-board mobile radios 28 and the position of the vehicle along its planned route.

The OBRU controller 48 stores the planned route including the positions of the radio base stations along the route. It maintains a list of the active connections and keeps track of the location of the train using a global positioning satellite (GPS) mechanism (not shown). It may also detect the speed and direction of the train obtained from a train speedometer and electronic compass or GPS system. From this information, the OBRU controller 48 determines the location of the vehicle relative to a current serving base station A and an upcoming target handover base station B along the planned route. When the determined location of the vehicle is a certain distance and/or time from the target base station B, the handover preparation controller 50 formulates and sends a handover preparation notification message to the target base station B. Other criteria may be used to determine when to send the handover notification message. For example, the message could be sent when any one of the mobile radios in the group receives a signal from the target base station at or above a minimum threshold. However, an earlier notification time is preferred.

The handover preparation notification message is sent by way of radio circuitry 49 and the high-gain, directional antenna 24 directly to the target base station B. Being generally pointed towards the target base station and being high-gain, the antenna 24 permits the OBRU to effectively transmit the notification from relatively far away to give the target base station plenty of advance preparation time. The handover notification message includes a list of the active mobile radio connections that will likely be handed over. The message may also communicate other information like one or more of the following: a vehicle identifier, an OBRU identifier, a serving base station identifier, channel information/identification of the active connections, identifiers of the active mobile radios, the position and/or speed of the vehicle, an estimated time of the handover, etc. This advance notice allows the base station B to get an early start planning for the foreseeable handovers of the active mobile radio connections associated with the moving vehicle 20.

In particular, target radio base station B can reserve or otherwise make ready whatever data processing and radio resources are needed to effect the group handover and thereby minimize the chances of a dropped connection. Example radio resources might include frequencies, time slots, spreading codes, transceivers, bandwidth, class of service, specified minimum delay times, etc. Indeed, it is quite possible that one or more of the on-board mobile radio units may be requesting a particular class of service that requires more radio resources than a standard connection, i.e., more bandwidth, low delay, etc. The advance notice is also advantageous if the target base station does not currently have sufficient resources to accommodate the group of handovers given its current load. With the information in the handover notification message, the target base station B may elect to transfer one or more existing connections to a nearby base station to free up sufficient resources for the handovers from the vehicle.

The handover preparation circuitry 50 can send the handover notification message via directional antenna 24 either asynchronously with respect to the timing of the target base station 14 or synchronously with the target base station timing. An asynchronous notification message may be more suitable for an asynchronous cellular communication system such as code division multiple access (CDMA) system. A synchronized signal may be more suitable for time division multiplexed systems like GSM, DECT, etc.

Because the target base station B is notified and prepared for the upcoming handovers, the handover process for each of the mobile radios in the group with active connections can be started much earlier than in traditional handover operations. Starting the handover operation earlier increases the likelihood that all of the handover operations will be performed before the time that the vehicle is out of range of the current serving base station A. The RBC controller 40 receives information from the OBRU controller 48 via a transmission labeled "A" in Fig. 2 sent via omni-directional antenna 22 and the serving base station A. That information identifies the active connections associated with mobile radios 28 on the vehicle. It may also include other information like the speed, direction, and location of the vehicle 20 to assist the RBC in deciding when to initiate the handover of those connections to target base station B.

Early handover initiation may be implemented by using a lower signal strength/quality threshold when comparing the received signal strength/quality measurements for various base stations provided by the mobile radios. Typically, a handover is not initiated until it is certain that the signal strength/quality received from the target base station is better than the signal strength/quality received from the serving base station. Indeed, there may also be a requirement that the target base station signal strength be greater than the serving base station signal strength for at least a predetermined time period.

In contrast, a handover operation in accordance with one aspect of the present invention can be initiated from the serving base station to the target base station when the signal strength/quality from the target base station reaches a minimum signal strength/quality value sufficient to effect radio communication using the target base station. That minimum level is typically satisfactory in this situation because the vehicle is moving towards the target base station, it is likely that the communication level will improve absent some major obstacle. Once that minimum threshold is reached, the radio base station controller initiates a forced handover of the active communications using conventional handover signaling with the serving and target base stations A and B and with each of the mobile radios 28 with active connections. Again, the on-board radio unit 26 is not involved in the actual handover operations. Existing and often standardized handover procedures and protocols are performed, just earlier in time.

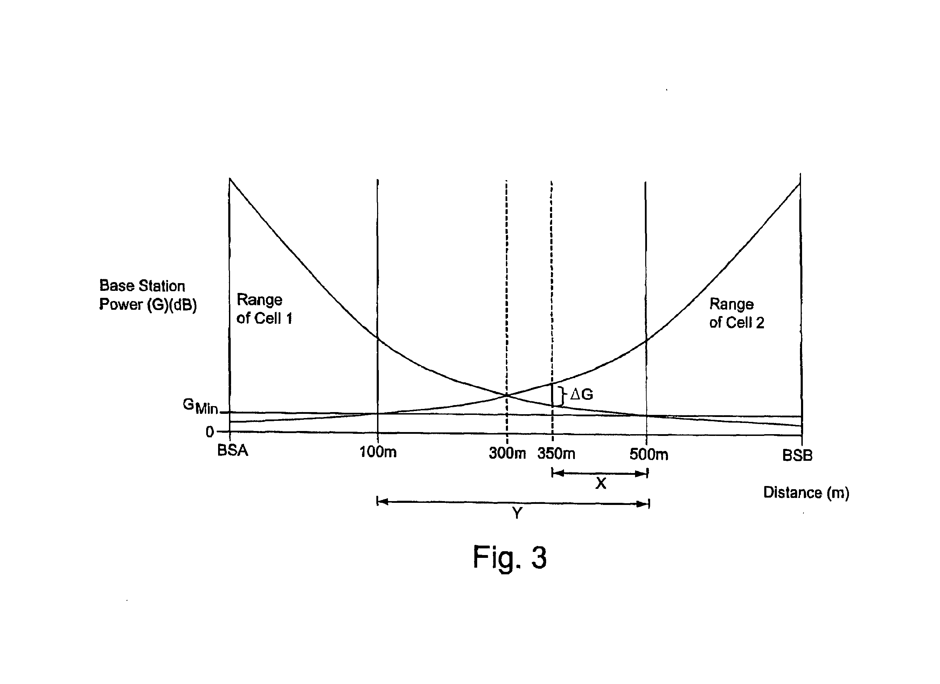

Some advantages of the present invention are now described in conjunction with Fig. 3 which illustrates a mobile radio unit traveling from left to right from cell A and moving into the range of cell B. The signal strength (G) of the transmitted base station signals is indicated along the vertical axis. The horizontal axis represents distance in meters. Gₘᵢₙ is a minimum signal strength from a base station required for satisfactory communication, and in a preferred example embodiment, corresponds to a handover initiation threshold.

In order for a typical handover "A" to be initiated, the signal strength of the serving base station in cell A must be lower than the signal strength of the target base station in cell B, which in this example occurs at 300 meters (marked by a dashed line). A further typical handover requirement is that the difference ΔG in received signal strength between the target and the serving base stations be greater than a certain threshold for a certain time period. This difference ΔG occurs in the illustrated example at 350 meters. The handover is therefore initiated at 350 meters. The remaining distance the vehicle can travel before radio signals from the serving base station can no longer be realistically received by the vehicle mobile radios is the labeled distance X of 150 meters. In other words, the handovers must be completed successfully before the vehicle reaches a 500 meter distance from base station A.

Assume a group handover procedure for handing over multiple connections takes four seconds. At a speed of 360 kilometers per hour (100 meters per second), the four second requirement corresponds to a traveling distance of 400 meters. But only 150 meters remain before the connections between the mobiles on the vehicle and serving base station A are lost. In short, that remaining distance is not adequate to successfully complete the group of handovers. Many, if not all, of the mobile connections in the group will be lost.

Advanced notification of the handover and earlier initiation of the handover overcome this problem. At the 100 meter mark, as opposed to the 350 meter mark, the signal strength from the target base station B is sufficient for a satisfactory communication with each of the mobile radios on the vehicle. At or before that point, the target base station is notified by the on-board radio unit 26 of the impending group handover. Also at that point, the radio base station controller 18 initiates handovers with each of the mobile radios 28 having an active connection. The handovers could also be initiated by the target base station since it already knows about the upcoming handovers.

By initiating the handover operation at 100 meters rather than 350 meters, the time it takes to travel 400 meters is the time available to perform the handovers. Assuming a vehicle speed of 360 kilometers per hour and a multiple handover procedure time of four seconds, the necessary remaining travel distance needs to be 400 meters or more. Accordingly, the earlier handover initiation provides enough distance/time to ensure successful handover of the active connections associated with the vehicle 20.

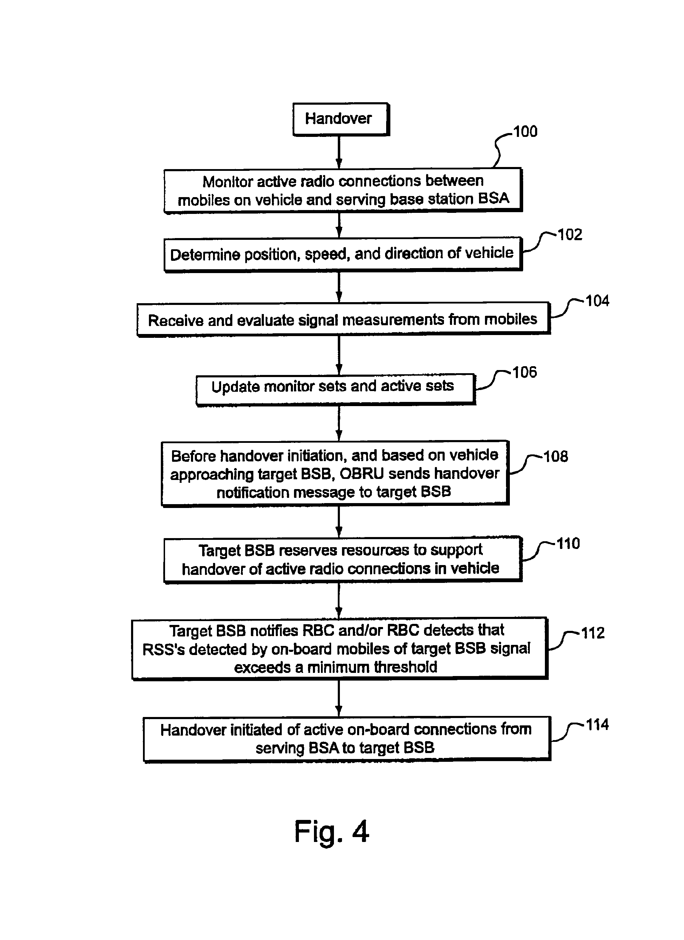

A handover routine shown in flowchart figure 4 form illustrates procedures in accordance with one example embodiment in the present invention. The on-board radio unit controller 48 monitors/identifies those radio links which are active between the on-board mobile stations 28 in the current serving cell A (block 100). Controller 48 may also determine the position, direction, and speed of the vehicle 20 (block 102) and report that information to the radio base station controller 18. The radio base station controller 18 also receives and evaluates signal strength measurements from the mobile stations via the serving base station A (block 104), and uses this measurement information to update the monitor sets and active sets stored in its databases 44 and 46 (block 106).

Before handover initiation occurs and based on a determination that the vehicles are approaching the target base station B, the on-board radio unit handover preparation controller 50 sends a handover notification message to the target base station B (block 108). The target base station B then reserves resources sufficient to support handover of the active radio connections in the vehicle. As described above, this operation may require freeing up resources by handing over existing connections at base station B to other cells. The target base station B notifies the radio base station controller 18 and/or the radio base station controller 18 determines that the signal strength detected by the on-board mobile radios or by the OBRU controller 48 from the target base station exceeds a minimum threshold (block 112). Handover is then initiated of the active on-board connections from the serving base station to the target base station (block 114).

Many additional and/or alternative features or embodiments are possible. For example, the OBRU controller 48 may be used as a communications link between a train and a central control room of the railways (Central Control). Information concerning traffic control, security issues, travel schedules and adaptations, collision and other warnings, etc. would then be communicated via the OBRU to the driver. In addition, the call connection between OBRU and Central Control may be given the highest priority to ensure that for any handover, the communication connection with the OBRU will receive the highest priority in the hand over to the target radio base station. Other on-board mobile station connections may also be prioritized in the handover procedure depending on the mobile subscriber's subscription or the class/type of ticket the passenger purchased. Mobile stations on board may be identified by logging those mobile stations taking part in one or more handovers in relation to the route of the train. Identification and subscription information regarding priority of those mobile stations identified as on board may be obtained from the Mobile Switching Center (MSC)/ Home Location Register (HLR).

In another example aspect of the invention, the OBRU may be coupled to a black box (voice recorder) for the recording of all conversations between the driver, on board personnel and Central Control. The black box function on board of trains ensures greater safety in rail traffic and provides the possibility to reconstruct causes of accidents more easy. A black box for recording speed and other information may already be implemented in some trains and in other passenger vehicles like airplanes.

In another example aspect of the invention, the directional antenna, preferably placed on the train roof, is pointed towards the most likely or calculated target radio base station. The antenna may be moved in a variety of ways. One example option is manual control by the vehicle driver. Another example option is a coupling to the position of the front wheel train trucks which follows the direction of the tracks or vehicle route. A third example option uses direction parameters derived from route information stored and updated by Central Control. A software program may be used to translate these parameters to move the roof antenna towards the target radio base station. A list of radio base stations along the railroad track may be used to determine the next radio base station optimal for handover of the mobile stations on board of the train.

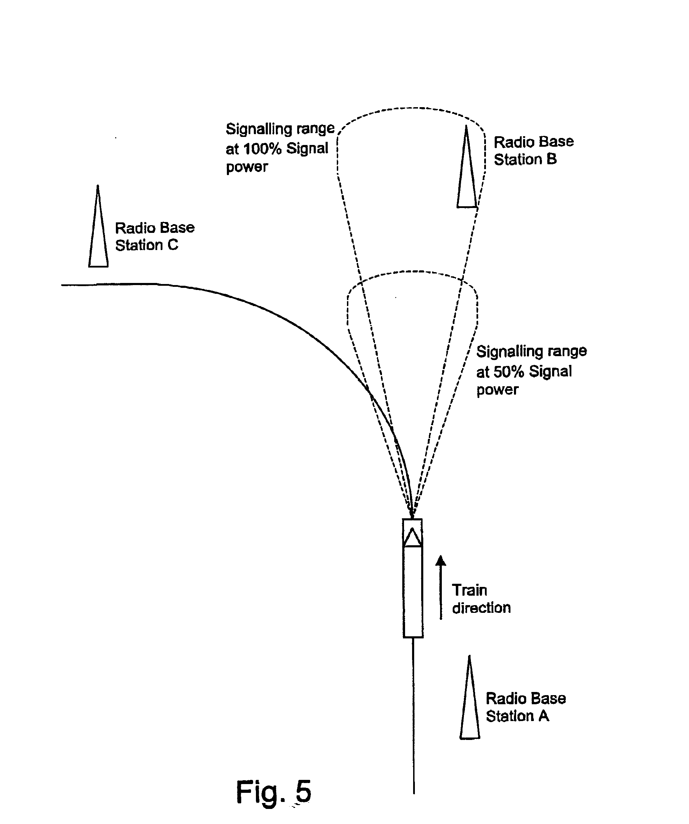

In another example aspect of the invention, the OBRU controls (increases or decreases) the power level of signals transmitted from the directional antenna. Consider the following example situation illustrated in Fig. 5. A train is at the start of a curve in the tracks, and the directional antenna is pointed towards a radio base station B that is situated on the outside of the curve at a considerable distance. Because of that considerable distance, it is not desirable to handover call connections to base station B, particularly when just around the curve a much better base station C is situated for a handover. To avoid unnecessary or unwanted handovers, the OBRU may temporarily decrease or shut off the power of the directional signal so that a handover is not initiated with one or more undesirable base stations. In Fig. 5, the OBRU temporarily decreases signaling power to 50%. As soon as the train comes out of the curve, the signal level is increased to 100% to notify base station C.

The OBRU power level control is not limited to cornering situations. Another example application in the automobile/bus context might be at large traffic circles where a lot of traffic is involved in handovers or in connection with a base station that covers this traffic circle. In this case, the train OBRU should not interfere with or load such a crucial base station for the local traffic by initiating handovers of mobile stations on board of the train to that base station. Moreover, increasing the signal strength may be used to compensate for negative effects of surroundings like trees and buildings.

After having identified the mobile stations on board the train, the train driver may use the OBRU to send messages (e.g., SMS) to mobile stations on board of the train. These messages can concern travel information, tourist information, warnings, etc. Communicating via SMS is especially very useful for passengers with a hearing impairment who cannot rely on spoken messages through the intercom.

While the present invention has been described with respect to particular embodiments, those skilled in the art will recognize that the present invention is not limited to a specific example embodiment. Different formats, embodiments, and adaptations besides those shown and described as well as many variations, modifications, and equivalent arrangements may also be used to implement the invention. The invention should be limited only by the scope of the claims appended hereto.

## Claims

1. A radio unit (26) for use on board a vehicle (20) transporting a group of mobile radios (28) containing at least one mobile radio (28), comprising:
a controller (48) configured to identify active radio connections between corresponding mobile radios (28) in the group and a first radio base station (12, 14, 16) that will need to be handed over to a second radio base station (12, 14, 16) , and
radio transmitting circuitry (49) configured to send a message to the second radio base station (12, 14, 16) with the identified connections to prepare the second radio base station (12, 14, 16) for handover of the identified connections.

2. The radio unit in claim 1, wherein the radio unit is integrated with or connected to a mobile radio, and wherein the radio transmitting circuitry (49) includes a first omni-directional antenna (22) for communication with the first radio base station (12, 14, 16) and a second directional antenna (24) for communication with the second radio base station (12, 14, 16).

3. The radio unit in claim 1, wherein the moving vehicle (20) is a train, airplane, bus, ship, or other people transporter.

4. The radio unit in claim 1, wherein the message includes one or more of the following: an identifier of the vehicle (20), an identifier of the radio unit (26), an identifier of the first radio base station (12, 14, 16), a speed of the vehicle (20), a number of radio connections to be handed over, and a list of mobile radio identifiers corresponding to the identified connections.

5. The radio unit in claim 1, wherein the controller is configured to send the message before a time when any one of the mobile radios (28) in the group receives a signal from the second radio base station (12, 14, 16) at or above a minimum threshold.

6. The radio unit in claim 1, wherein the handover preparation circuitry (50) is configured to send the message asynchronously with respect to timing at the second radio base station (12, 14, 16) or synchronously with respect to timing at the second radio base station (12, 14, 16).

7. The radio unit in claim 1, wherein the handover preparation circuitry (50) is configured to determine a direction or route of travel of the vehicle (20) to identify that handover of the identified connections to the second radio base station (12, 14, 16) will be required.

8. A mobile radio system (10) for providing handover of a group of mobile radios (28), comprising:
an on-board radio unit (26) for use on a vehicle (20) transporting the group of mobile radios (28);
a first radio base station (12, 14, 16) for supporting active connections to corresponding selected ones of the mobile radios (28) in the group;
a second radio base station (12, 14, 16) in the path of the vehicle (20); and
a base station controller (18) coupled to the first and second radio base stations (12, 14, 16) for coordinating handover of the active connections from the first radio base station (12, 14, 16) to the second radio base station (12, 14, 16),
wherein the on-board radio unit (26) is configured to notify the second radio base station (12, 14, 16) in advance of initiation of the handover.

9. The mobile radio system in claim 8, where in response to the notification, the second radio base station (12, 14, 16) reserve resources in anticipation of initiation of the handover of the active connections.

10. The mobile radio system in claim 9, wherein the on-board radio unit (26) is configured to send the notification when mobile radios (28) in the group receive a communication from the second radio base station (12, 14, 16) at or above a minimum threshold or when the on-board radio unit (26) determines that a position of the vehicle (20) is near the second base station (12, 14, 16).

11. The mobile radio system in claim 9, wherein the base station controller (18) initiates an early handover operation in conjunction with the notification to allow more time for the handover when one or more of the mobile radios (28) receives a signal from the second radio base station (12, 14, 16) greater than a minimum threshold.

12. The mobile radio system in claim 9, wherein if the second radio base station (12, 14, 16) has insufficient resources for the handover, the second radio base station (12, 14, 16) is configured to handover a connection with another mobile radio (28) to a third radio base station (12, 14, 16) to free up resources for handover of the identified connections.

13. The mobile radio system in claim 9, wherein the notification is sent synchronously or asynchronously with timing in the second radio base station (12, 14, 16).

14. A method for handing over mobile stations (28) from a first radio base station (12, 14, 16) to a second radio base station (12, 14, 16), comprising:
monitoring (100) active radio links between the mobile stations (28) and the first radio base station (12, 14, 16);
selecting a group of the active radio links to be forced to make a handover from the first base station (12, 14, 16) to the second base station (12, 14, 16);
transmitting (108) a handover notification signal to the second base station (12, 14, 16); and
thereafter, initiating (114) a handover of the selected group from the first base station to the second base station.

15. The method in claim 14, wherein the selected group corresponds to a group of mobile radios (28) all moving in the same direction away from the first base station (12, 14, 16) towards the second base station (12, 14, 16).

16. The method in claim 14, wherein the notification signal is sent in synchronization with timing at the second base station (12, 14, 16).

17. The method in claim 14, wherein the notification signal is sent asynchronously with respect to timing at the second base station (12, 14, 16).

18. The method in claim 14, wherein the handover notification includes one or more of the following: an identifier of the radio unit (26), an identifier of the first radio base station (12, 14, 16), a number of radio connections to be handed over, and a list of mobile radio identifiers corresponding to the identified connections.

19. The method in claim 14, wherein in response to the handover notification, the second radio base station (12, 14, 16) reserves (110) resources for the selected group in advance of initiation of the handover.

20. The method in claim 14, wherein the selected group corresponds to mobile radios (28) in a moving vehicle (20).
